# EUROPÄISCHE PATENTSCHRIFT

(11) **EP 0 582 949 B1**
(45) Veröffentlichungstag und Bekanntmachung des Hinweises auf die Patenterteilung: **13.05.1998**
(21) Anmeldenummer: 93112458.0
(22) Anmeldetag: 04.08.1993
(51) Int. Cl.: B01D 27/04, F01M 11/03, F02M 37/22

(54) **Filter für Flüssigkeiten**
Filter for liquids
Filtre pour liquides

(30) Priorität: 08.08.1992 DE 4226267
(43) Veröffentlichungstag der Anmeldung: 16.02.1994
(73) Patentinhaber: KNECHT FILTERWERKE GMBH, 70376 Stuttgart (DE)
(72) Erfinder: bruss, Elke, D-71679 Asperg (DE); Sonntag, Dietmar, D-71686 Remseck (DE); Gebert, Hans, D-74080 Heilbronn (DE)
(74) Vertreter: Patentanwalts-Partnerschaft Rotermund + Pfusch

(56) Entgegenhaltungen:
- EP-A- 0 259 594
- EP-A- 0 447 830
- DE-A- 3 210 795
- DE-C- 3 514 778

## Beschreibung

Die Erfindung betrifft einen Filter für Flüssigkeiten, insbesondere für Kraftstoff für einen Verbrennungsmotor nach dem Oberbegriff des Anspruchs 1.

Ein derartiger Kraftstoffilter ist aus der DE-OS 32 10 795 bekannt. Bei diesem Filter wird der Roh- vom Reinraum durch einen mit Endscheiben versehenen ringförmigen Filtereinsatz getrennt, wobei die eine Endscheibe die eine mittlere Öffnung des Filtereinsatzes verschließt und mit ihrem radialen Außenumfang nur abschnittsweise am Filtergehäuse anliegt und die andere Endscheibe die zweite Öffnung des Filtereinsatzes offen läßt und über eine zusätzliche radiale Dichtung am Filtergehäuse anliegt.

Nachteilig an dieser Ausführung ist, daß eine zusätzliche Dichtung vorgesehen werden muß, die insbesondere den Montageaufwand und die Kosten erhöht.

Problem der vorliegenden Erfindung ist es daher, einen derartigen Filter so auszubilden, daß eine dauerhafte Abdichtung zwischen Filtereinsatz und Filtergehäuse mit konstruktiv einfachen und kostengünstigen Mitteln erreichbar ist.

Gelöst wird dieses Problem durch eine Ausbildung des Filters nach den Merkmalen des kennzeichnenden Teils des Anspruchs 1.

Mit einer derartigen Ausführung ist durch die Verwendung eines speziellen, in Flüssigkeiten quellbaren Kunststoffes für die am Filtergehäuse anliegende Endscheibe eine ausreichende Abdichtung zwischen Filtereinsatz und Filtergehäuse erreicht, da der Kunststoff der Endscheibe beim Aufquellen sich radial nach außen ausdehnt und damit die dichtende Anpressung der Endscheibe an das Filtergehäuse bewirkt bzw. diese verstärkt.

Vorteilhafte Ausgestaltungen nach der Erfindung sind in den Unteransprüchen enthalten.

Zum Stand der Technik ist noch auf die DE-OS 40 09 344 hinzuweisen, aus der die Verwendung eines mit einem Quellwert zwischen 1% und 10% quellbaren Kunststoffes für die Endscheiben an sich bekannt ist. Dort besteht jedoch das Problem darin, die Endscheibe durch spezielle konstruktive Maßnahmen so auszubilden, daß die radial innen mit ihrem Innenumfang an einem Stutzen anliegende Endscheibe eine Abdichtung zwischen diesem Stutzen und der Endscheibe gewährleistet. Ein Hinweis auf eine Anwendung gemäß vorliegender Erfindung kann diesem Stand der Technik nicht entnommen werden.

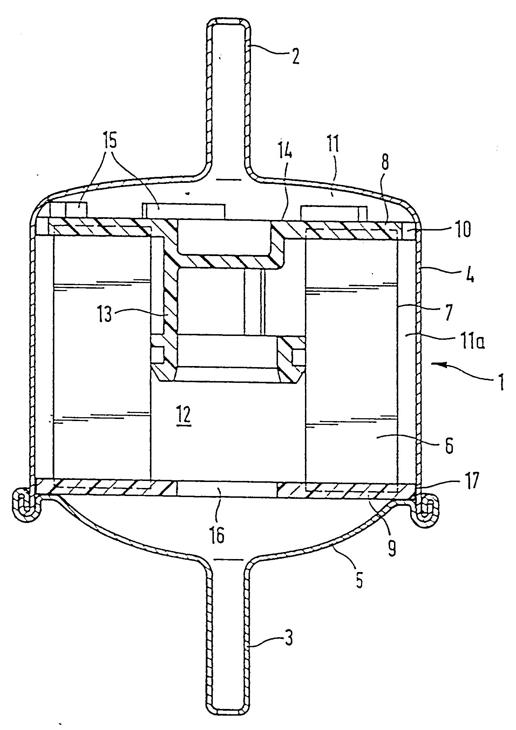

Nachstehend wird anhand eines in der Zeichnung dargestellten Ausführungsbeispiels die Erfindung näher beschrieben.

Ein Kraftstoffilter 1, der über Anschlußstutzen 2, 3 an eine Kraftstoffleitung (nicht gezeichnet) angeschlossen werden kann, besteht aus einem Filtergehäuse 4 und einem Filtergehäusedeckel 5, die durch Rollieren fest miteinander verbunden sind. Ein im Inneren des Filtergehäuses 4 gelagerter Papier-Filtereinsatz 6 umfaßt ein ringförmiges, sternförmig gefaltetes Papierband 7, das mit seinen Enden in einer ersten 8 und einer zweiten Endscheibe 9 aus Kunststoff einplastifiziert ist. Die erste, scheibenförmig ausgebildete Endscheibe 8 weist an ihrem äußeren Umfang Aussparungen 10 auf, damit der durch die Anschlußstutzen 2 zugeführte Kraftstoff in den Ringraum 11a des Rohraumes 11 des Kraftstoffilters 1 gelangt. Zur Abstützung des sternförmig gefalteten Papierbandes 7 sind an der ersten Endscheibe 8 in den Reinraum 12 ragende Verstrebungen 13 einstückig angeformt. Zur Abstützung des Filtereinsatzes 6 am Filtergehäuse 1 sind an der ersten Endscheibe 8 an ihrer oberen, dem Rohraum 11 zugeordneten Oberfläche 14 auf ihrem Umfang gleichmäßig verteilte Fortsätze 15 einstückig angebracht.

Die zweite Endscheibe 9 ist mit einer mittigen Ausnehmung 16 versehen und liegt mit ihrem Außenumfang 17 direkt dichtend am Filtergehäuse 1 an. Als Werkstoff für insbesondere die Endscheibe 9 wird ein in dem Kraftstoff guellender Kunststoff, insbesondere Polypropylen, verwendet, dessen Quellwert ca. 9% beträgt.

Hiermit wird durch Verwendung des speziellen in Flüssigkeiten quellbaren Kunststoffes für die Endscheibe des Filtereinsatzes auf konstruktiv einfache Weise eine Abdichtung zwischen Filtereinsatz 6 und Filtergehäuse 4 erreicht, die eine saubere Trennung von Roh- 11 und Reinraum 12 gewährleistet.

## Patentansprüche

1. Filter für Flüssigkeiten, insbesondere für Kraftstoff für einen Verbrennungsmotor mit einem aus zwei Teilen bestehenden geschlossenen Filtergehäuse, in dem ein mit Endscheiben versehener ringförmiger Filtereinsatz gelagert ist, der einen Roh- von einem Reinraum trennt, wobei einerseits die eine Endscheibe eine mittlere Öffnung des Filtereinsatzes abdeckt und mit ihrem radialen Außenumfang nur abschnittsweise am Filtergehäuse anliegt und andererseits die andere Endscheibe eine zentrale, innerhalb des Filtergehäuses liegende Öffnung besitzt, die zweite Öffnung des Filtereinsatzes offen läßt und einen Ringraum zwischen Filtereinsatz und Filtergehäuse durch eine dort radial außen vorgesehene radiale Abdichtung verschließt,
**dadurch gekennzeichnet,**
daß die den Ringraum (11a) zwischen Filtereinsatz (6) und Filtergehäuse (4) verschließende Endscheibe (9) aus einem unter dem Kraftstoff in bekannter Weise mit einem Quellwert zwischen 1 % und 10 % aufquellenden Kunststoff besteht und als einzige Dichtung dieser Endscheibe (9) dem Filtergehäuse (4) gegenüber direkt dichtend am Filtergehäuse (4) anliegt.

2. Filter nach Anspruch 1,
**dadurch gekennzeichnet,**
daß die Endscheibe (9) aus Polypropylen als quellbarem Kunststoff mit einem Quellwert von 1 bis 10 % bezogen auf Kraftstoff besteht.

3. Filter nach Anspruch 1 oder 2,
**dadurch gekennzeichnet,**
daß die die mittlere Öffnung des Filtereinsatzes (6) verschließende Endscheibe (8) mit ihrem mit Aussparungen (10) versehenen Außenumfang und/oder mit an ihrer oberen dem Anschlußstutzen (2) zugewandten Oberfläche (14) angebrachten, auf dem Umfang gleichmäßig verteilten Fortsätzen (15) am Filtergehäuse (4) anliegt.

4. Filter nach Anspruch 3,
**dadurch gekennzeichnet,**
daß die Endscheibe (8) mit in den Raum (12) ragenden, den Filtereinsatz (6) stützenden Verstrebungen (13) einstückig verbunden ist.

## Claims

1. Filter for liquids, in particular for fuel for an internal-combustion engine, with a closed filter casing which consists of two parts and in which an annular filter insert provided with end discs is located, the filter insert separating a crude chamber from a clean chamber wherein, on the one hand, one end disc covers a central orifice of the filter insert and rests with its radial external periphery only partially on the filter casing and, on the other hand, the other end disc has a central orifice located within the filter casing, leaves the second orifice of the filter insert open and seals an annular space between filter insert and filter casing by means of a radial seal provided radially externally there, characterized in that the end disc (9) sealing the annular chamber (11a) between filter insert (6) and filter casing (4) consists of a plastics material which swells in a known manner with a swelling value between 1% and 10% beneath the fuel and rests in a directly sealing manner on the filter casing (4) as the only seal between this end disc (9) and the filter casing (4)

2. Filter according to claim 1, characterized in that the end disc (9) consists of polypropylene as swellable plastics material with a swelling value of 1 to 10% with respect to fuel.

3. Filter according to claim 1 or 2, characterized in that the end disc (8) sealing the central orifice of the filter insert (6) with its external periphery provided with recesses (10) and/or with projections (15) arranged on its upper surface facing the connecting nozzle (2) and distributed uniformly round the periphery rests on the filter casing (4).

4. Filter according to claim 3, characterized in that the end disc (8) is integrally connected to cross-braces (13) projecting into the chamber (12) and supporting the filter insert (6).

## Revendications

1. Filtre pour liquides, en particulier pour carburant en particulier, pour un moteur à combustion interne, avec un boîtier filtrant fermé composé de deux parties et dans lequel est logée une cartouche filtrante annulaire munie de rondelles d'extrémité, qui sépare un espace brut d'un espace épuré, l'une des rondelles d'extrémité couvrant une ouverture centrale de la cartouche filtrante et ne s'appliquant que par sections sur le boîtier filtrant par son pourtour radial externe, d'une part, et l'autre rondelle d'extrémité présentant une ouverture centrale, située à l'intérieur du boîtier filtrant, laissant ouverte la seconde ouverture de la cartouche filtrante, et fermant un espace annulaire compris entre la cartouche et le boîtier filtrant, par une étanchéité radiale prévue dans le sens radial externe, d'autre part, caractérisé en ce que la rondelle d'extrémité (9), qui ferme l'espace annulaire (11a) compris entre la cartouche filtrante (6) et le boîtier filtrant (4), se compose d'une matière plastique, d'un taux de rétention de liquide de 1 à 10 %, expansive d'une manière connue sous l'effet du carburant, et s'applique en tant que joint unique de cette rondelle (9), en vis-à-vis du boîtier filtrant (4), directement et hermétiquement sur ce dernier (4).

2. Filtre suivant la revendication 1, caractérisé en ce que la rondelle d'extrémité (9) se compose de polypropylène en tant que matière plastique expansive, avec un taux de rétention de liquide de 1 à 10 % par rapport au carburant.

3. Filtre suivant l'une des revendications 1 et 2, caractérisé en ce que la rondelle d'extrémité (8), fermant l'ouverture centrale de la cartouche filtrante (6), s'applique sur le boîtier filtrant (4) par son pourtour externe muni d'évidements (10) et/ou par des prolongements (15) régulièrement répartis sur le pourtour, formés sur sa surface supérieure (14) tournée vers la tubulure de jonction (2).

4. Filtre suivant la revendication 3, caractérisé en ce que la rondelle d'extrémité (8) est assemblée d'une seule pièce avec des entretoisements (13), qui pénètrent dans l'espace (12) et supportent la cartouche filtrante (6).
